# EUROPEAN PATENT APPLICATION

(11) **EP 0 892 282 A2**
(43) Date of publication of application: **20.01.1999**
(21) Application number: 98113106.3
(22) Date of filing: 14.07.1998
(51) Int. Cl.: G01S 17/46

(54) **Object sensing apparatus**

(30) Priority: 15.07.1997 JP 189842/97
(71) Applicant: SEIKO PRECISION INC., Tokyo, 130 (JP)
(72) Inventor: Oda, Hajime, c/oSeiko Precision Inc. Chiba Office, Yotsukaiko-shi, Chiba-ken (JP); Ito, Hitoshi, c/oSeiko Precision Inc. Chiba Office, Yotsukaiko-shi, Chiba-ken (JP)
(74) Representative: Hoffmann, Eckart, Dipl.-Ing.

(57) **Abstract**

An object sensing apparatus comprises a distance measuring device (1) having light projecting means (11, 11a) for projecting a measurement light beam toward an object (*T*), and light receiving means (12, 12a) for receiving a reflected light beam reflected by said object, and a filter member (3) provided in front of said distance measuring device (1) with a predetermined spacing in between. The filter member or a portion of it is provided at an angle of inclination (θ) such that components of the measurement light beam reflected or scattered by an inner surface of said filter member are given a direction different from a direction toward said light receiving means.

## Description

The present invention relates to an object sensing apparatus for accurately sensing an object, such as a human body or the like, approaching an automatic door or the like.

Distance measurement based on the principle of triangulation is well known. Light is projected from a light emitting element such as an infrared-ray diode through a projecting lens toward an object to which the distance is to be measured. Reflected light from the object is received by a light receiving element such as a PSD (position sensitive detector) placed behind a light receiving lens and at a predetermined distance, the so-called base line length, from the light emitting element. The distance is obtained from a position signal of the PSD.

There has also been an object sensing apparatus for a safety equipment utilizing such distance measurement and having a distance measuring device mounted in the vicinity of an automatic door or attached to the door itself so that the distance to a passer or an approacher to the door, or a direction of movement when the door is being closed or about to be closed, is detected in order to take a measure such as prohibiting the door from closing, if required.

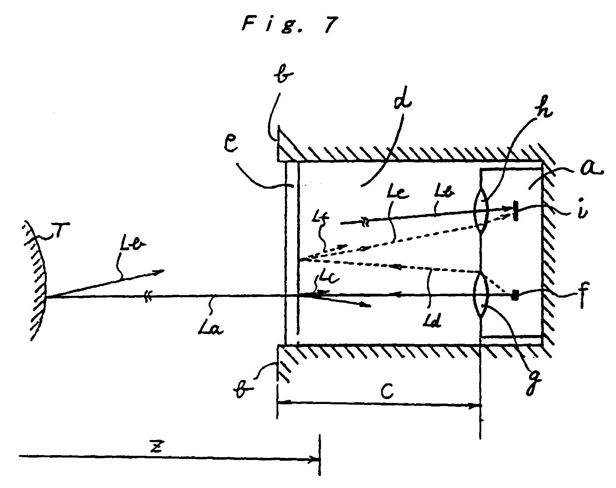

The range of distances that can be measured by a distance measuring device of this kind (referred to as "distance measurable range" hereinafter) is indicated by Z in Fig. 7. For reasons that are not be explained in detail here, the distance to objects within a "dead zone", i.e., the region between the right-hand end of arrow Z and the distance measuring device *a*, cannot be measured. When distance measuring device *a* is installed at a location retracted by a distance *c* from the front surface *b* of an installation site, a cavity or space *d* is created in front of the distance measuring device *a*. With this structure, when *c* is long enough, the front surface *b* is outside of the dead zone. In other words, the range to the left of the front surface *b* where there is a possibility that someone approaches is within the distance measurable range. On the other hand, if the distance measuring apparatus *a* is installed at such a retracted location, dust or the like tends accumulate within the space in front of the device *a* or in the vicinity of a front opening at the front surface *b*. In order to avoid this, it is necessary to provide a protection cover, a filter or the like (hereinafter referred to as a filter member) *e* close to the front surface *b* in order to prevent malfunctioning.

Different from the case where a filter member is provided immediately in front of a distance measuring device as in auto-focusing cameras, if a filter member *e* is provided at some spacing *c* to and in parallel with the distance measuring device *a*, the following problems occur. Light *La* emitted by a light emitting element *f* passes through a light projecting lens *g* and is projected toward an object *T*. Light *Lb* reflected by the object *T* is transmitted through a light receiving lens *h* and impinges on a light receiving element *i*. Part of the light *La* is scattered by the inner surface of filter member *e*, causing scattered light *Lc*. From light *Ld* transmitted through a marginal portion of light projecting lens *g* reflected light *Le* or scattered light *Lf* is similarly created at the inner surface of filter member *e*. These light components pass through light receiving lens *h* and arrive at light receiving element *i*, as various conditions may be. This extra reflected light or scattered light, when arriving at light receiving element *i*, causes an error in the measurement result and makes accurate distance measurement impossible.

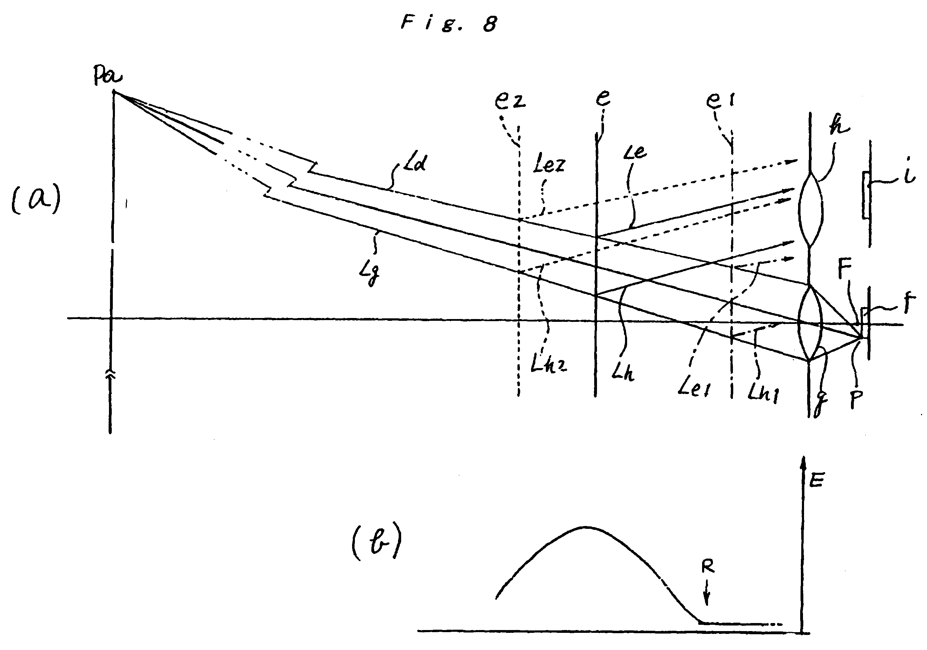

Light reflection at the inner surface of filter member *e* is explained in more detail with reference to Fig. 8(a). Light emitting element *f* is usually arranged at some distance behind the focal plane *F* of light projecting lens *g* so that an image thereof is focused at a point having a predetermined distance from light emitting lens *g*. The light passing through light projecting lens *g* includes light beams from secondary light sources such light reflected by a substrate mounting light emitting element *f*, a stem and a case surface, in addition to direct light from light emitting element *f*. If an outer peripheral point *P* of the light emitting element or the substrate is taken as an example, this point *P* is focused at *Pa* due to light *Ld*, *Lg* transmitted through light projecting lens *g*.

Assuming that filter member *e* is arranged in parallel with a plane perpendicular to the light projecting axis (optical axis of lens *g*), the direction of light components of light *Ld*, *Lg* reflected by the inner surface of filter member *e* has been investigated for different spacings between the filter member and the light projecting lens: the filter member *e1* is at a location closer to light projecting lens *g* than that of the filter member *e*, and the filter member *e2* is at a location more distant from light projecting lens *g* than that of filter member *e*. Incidentally, scattered light from the reflecting surface is considered negligible and excluded from the study.

The light caused by reflection of the light *Ld* and light *Lg* at the inner surface of filter members *e1*, *e* and *e2* are respectively *Le1*, *Le*, *Le2* and *Lh1*, *Lh*, *Lh2*.

Reflected light *Le1* and *Lh1* does not pass through light receiving lens *h* and does not arrive at light receiving element *i* and, therefore, has no effect upon the measurement result.

However, reflected light beams *Le* and *Lh* both pass through light receiving lens *h* and arrive at light receiving element *i* and have, thus, an effect upon a measurement result.

Reflected light *Le2* does not pass through light receiving lens *h* and does not arrive at light receiving element *i*. However, reflected light *Lh2* passes through light receiving lens *h* and arrives at light receiving element *i*. In this case also, the measurement result is affected.

The degree of influence depends upon various conditions such as the aperture of the light projecting/receiving lens, base line length (distance between the light projecting and receiving lenses), size of the light emitting element, location of the light emitting element (distance from the lens), magnitude of secondary light, condition of reflecting surface of the filter member (magnitude and direction of diffusing reflection due to difference in smoothness), size and arrangement of the light receiving element, and so on, besides location of the reflecting surface. However, qualitatively, the effect or influence is depicted as a graph in Fig. 8(b) in which the degree of influence *E* on the distance measurement result is plotted on the ordinate and the distance between the light projecting lens and the filter member is plotted on the abscissa. As to be seen from the figure, there is almost no effect on the measurement result by filter member *e1* at a location within a spacing *R* from the lens. An effect appears and gradually increases as the spacing exceeds *R* and the filter member is positioned farther away from the lens. The effect becomes maximum at the location of filter member *e*. The effect becomes lower as the distance becomes farther than that of filter member *e* and is comparatively small at the location of filter member *e2*.

The location of filter member *e1* is within the dead zone within which distances cannot be measured by the distance measuring device a. Thus, if this location is selected either can the filter member not be positioned near to the front surface *b* of the cavity in front of the device *a*, or the length *c* of the cavity has to be made shorter. This latter possibility undesirably results in part of the dead zone extending in front of the installation site so that an object very near to the object sensing apparatus could possibly not be detected. On the other hand, the location of filter member *e2* or an even greater spacing requires the length of the cavity in front of the device *a* to be increased which is also undesirable.

It is an object of the invention to overcome the problems of the prior art explained above and to provide an object sensing apparatus which allows accurate and reliable object sensing over the entire range within which someone may approach.

This object is achieved with an object sensing apparatus as claimed in claim 1. Preferred embodiments of the invention are subject-matter of the dependent claims.

In accordance with an embodiment of the present invention the filter member is inclined with an angle of inclination such that light reflected or scattered by the inner surface of the filter member is reflected in a direction different from a direction toward said light receiving means. This makes it possible to positively measure a distance over the entire range in which there is a possibility that a passer may approach. At the same time it allows accurate distance measurement without error in the result of measurement.

Embodiments of the invention are described below with reference to the diagrammatic drawings, in which:
Fig. 1 is a horizontal sectional view showing a first embodiment of the present invention,
Fig. 2 (a) is an explanatory view used for explaining the principle of the present invention,
Fig. 2(b) is a graph showing the relationship between the spacing between the distance measuring device and a filter member and the angle of inclination of the filter member at which light reflected by the inner surface of the filter member has no effect upon the measurement result,
Fig. 3(a) is a horizontal sectional view showing a second embodiment,
Fig. 3(b) is a perspective view of a filter member,
Fig. 4 is a perspective view of a filter member according to a third embodiment,
Fig. 5 is a vertical sectional view showing a fourth embodiment,
Fig. 6(a) is a vertical sectional view showing a fifth embodiment,
Fig.(b) is a perspective view of a filter member for the fifth embodiment,
Fig. 7 is a horizontal sectional view for explaining a conventional example of a sensing apparatus,
Fig. 8(a) is an explanatory view showing light beams in the conventional example of Fig. 7, and
Fig. 8(b) is a graph showing the relationship between the spacing between the distance measuring device and a filter member and the degree of influence light reflected by the inner surface of the filter member has on the measurement result.

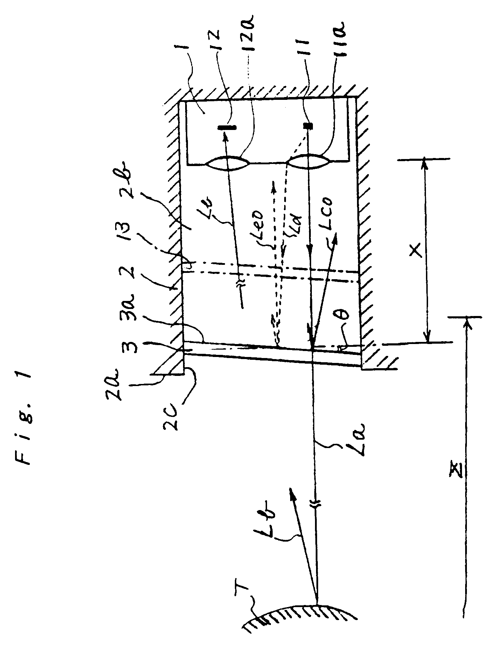

A first embodiment of the present invention is explained with reference to Fig. 1 showing a horizontal cross-sectional view. As shown in the drawing, a distance measuring device 1 is accommodated in and attached to an attaching member 2 of an object sensing apparatus. The attaching member 2 has a depth substantially greater than that of the distance measuring device 1. When the distance measuring device 1 is fixed deep inside the attaching member 2, a cavity 2b exists between the front surface 2a of the attaching member 2 and the front surface of the distance measuring device 1. The cavity 2b has, at its front end, an opening 2c in which is arranged a filter member 3. This filter member 3 is at a position corresponding to the position of the filter member e explained in Fig. 8.

The distance measuring device 1 has a light emitting element 11 and a light receiving element 12, such as a PSD, juxtaposed with a predetermined spacing and on the same plane. If viewed from the front of the apparatus, light emitting element 11 is on the right-hand side (lower side of the drawing) and light receiving element 12 is on the left-hand side (upper side of the drawing). A light projecting lens 11a is provided in front of light emitting element 11 and a light receiving lens 12a is provided in front of light receiving element 12. The spacing *X* between the line (or plane) connecting the axial centers of the lenses 11a, 12a and the center of the inner surface of the filter member 3 is chosen such that distance measuring device 1 has a distance measurable range Z beginning at a position which is closer to the device 1 than is the center of the filter member 3. Consequently, since the front surface 2a of the attaching member 2 is within the distance measurable range Z close to a boundary thereof, the distance to an object *T* can be accurately measured even when the object is approaching or near to the front surface 2a.

The filter member 3 is inclined at a predetermined angle θ so that components of the light emitted from light emitting element 11 which are reflected or scattered at the inner surface 3a of filter member 3 are given a direction in which they do not reach the light receiving element. That is, in this embodiment, the filter member 3 is inclined at the angle θ with respect to a plane perpendicular to the light projecting axis along which the light La emitted from the light emitting element 11 propagates. Filter member 3 is inclined in such a way that the spacing between the axial center plane of the lenses 11a, 12a and the inner surface of the filter member on the optical axis of light receiving lens 12a is shorter than the corresponding spacing on the optical axis of light projecting lens 11a.

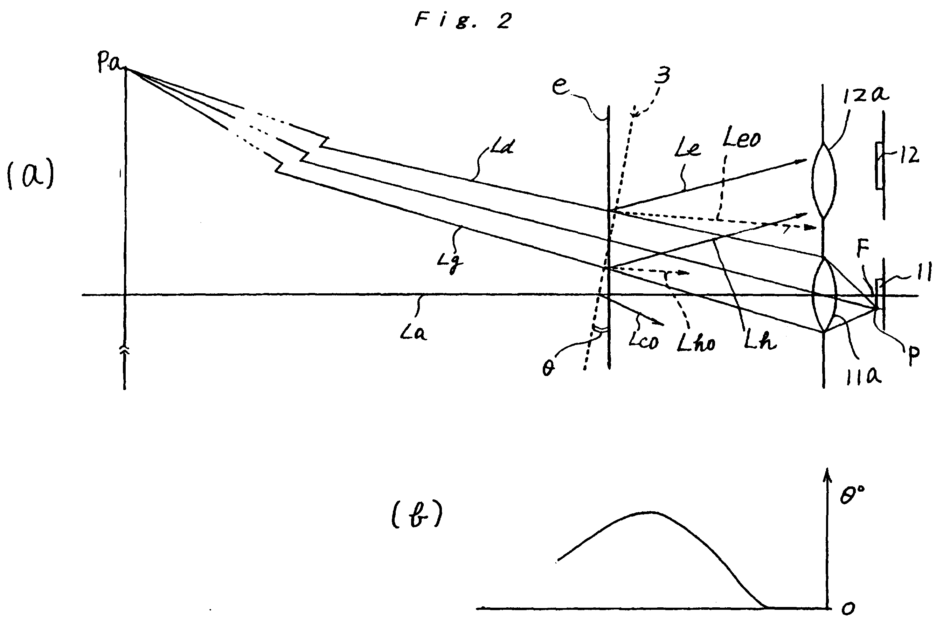

With this inclination, the direction of light reflected at the inner surface of filter member 3 is different from that of light reflected at the inner surface of filter member *e* in Fig. 8(a). This is shown in Fig. 2(a). In this figure, with filter member *e* placed perpendicular to the light beam *La* as in Fig. 8(a), reflected light *Le*, *Lh* passes through light receiving lens 12a and arrives at light receiving element 12. On the other hand, with filter member 3 inclined at angle θ, the direction of the reflected light is turned to the right (downward in the drawing) to that of light beams *LeO*, *LhO* and *LcO* as shown by dotted lines in Fig. 2(a). None of these light beams *LeO*, *LhO* and *LcO* passes through light receiving lens 12a and, hence, none of them arrives at light receiving element 12.

As shown in Fig. 1, light *La* from light emitting element 11 that passes through filter member 3, is reflected by the object *T* (the object to be sensed). The reflected light *Lb* passes through filter member 3 and light receiving lens 12a to reach light receiving element 12. It is, therefore, possible to accurately measure the distance to object *T* without reflected light or scattered light affecting the measurement result. Even if a filter member 13 which is located closer to the distance measuring device 1 than is filter member 3, is provided instead of filter member 3 as shown by dot-dash lines in Fig. 1, if it is inclined at a predetermined angle θ, accurate measurement of object *T* is possible similar to the case of filter member 3 explained above.

As for the magnitude of angle θ it is sufficient to consider light ray *Ld* at the outer periphery of the light beam, that has passed through the light projecting lens 11a and is incident on the inner surface of filter member 3. Light ray *Ld* originates from the rightmost (lowermost in the drawing) point *P* of light emitting element 11 and causes reflected light ray *LeO*. All other light rays emitted from points on light emitting element 11 closer to light receiving element 12 than point *P* are less critical. When such other light ray is reflected by the inner surface of filter member 3, the reflected light ray has a direction turned to the right or clockwise (downward as viewed in Fig. 2(a)) compared to light beam *LeO*. Accordingly, when the angle θ is set to a value at which the reflected light *LeO* is not incident on light receiving lens 12a the distance measurement is not affected by light reflected at the inner surface of filter member 3.

While reflection has been considered above, in practice light ray *Ld* will cause a diffused reflection at the inside surface of filter member 3. The effect of this diffused reflection changes with the spacing between the filter member and the distance measuring device 1. Fig. 2(b) shows a graph qualitatively illustrating the relationship between the required angle of inclination θ, plotted on the ordinate, and the spacing between filter member 3 and device 1, plotted on the abscissa. If filter member 3 is placed at a position near measuring device 1, there is no necessity of inclining the filter member. However, as the filter member is shifted away from the distance measuring device 1, the necessary angle θ gradually increases, reaches a maximum at a certain position and decreases again as the spacing between the filter member and the distance measuring device 1 is further increased.

As stated above, since the optimum value of angle θ depends on various structural conditions and diffused reflection, it is required that a predetermined angle θ be determined by experiments. To give one example: if the diameter of the light projecting lens is 13 mm, its focal length is 13 mm, the diameter of the light receiving lens is 13 mm, its focal length is 9 mm, the base line length is 20 mm, the spot diameter of light emitting element main light is 0.6 mm, and the filter member is installed at a spacing ca. 20 mm from the light projecting lens, an angle θ = 23° is appropriate. Where the filter member is installed at a spacing of 70 mm, an angle θ of 18° is appropriate.

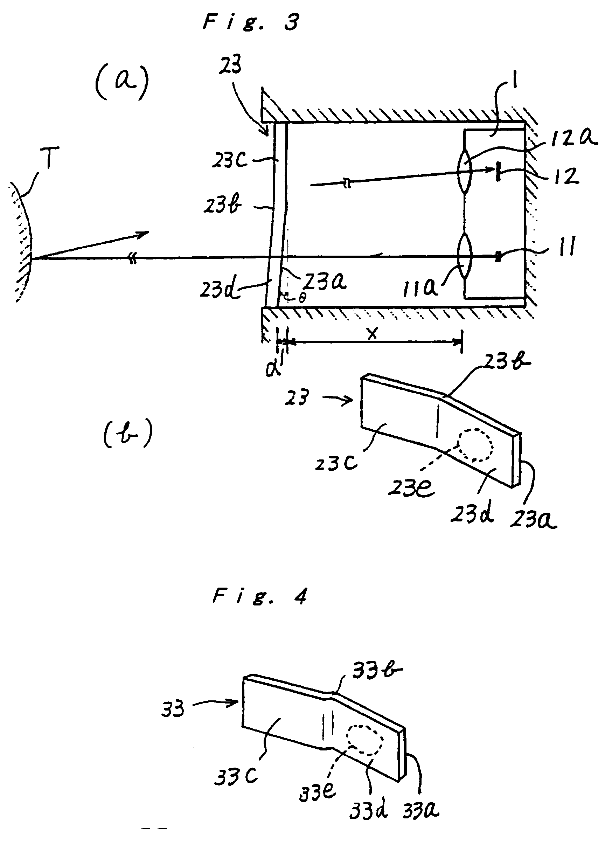

Fig. 3 shows a horizontal cross-sectional view of a second embodiment. In this embodiment, a filter member 23 is used instead of filter member 3 of the first embodiment. Filter member 23 has two portions, a portion 23c on the left-hand side (upper side in the drawing) of a central portion 23b and a portion 23d on the right-hand side (lower side in the drawing) of central portion 23b. The two portions are bent with respect to one another at central portion 23b. Portion 23c opposite to light receiving lens 12a is substantially perpendicular to the light projecting axis of the light emitting element 11. Contrary to this, portion 23d opposite to the light projecting lens 11a is inclined by a predetermined angle θ with respect to a plane perpendicular to the light projecting axis. Portion 23d is a portion where the spot formed by the light beam emitted from light emitting element 11 includes a spot area 23e within which the brightness equals or exceeds a predetermined value. This predetermined value represents a brightness that, if the light were reflected at the inner surface 23a of filter member 23 and would reach the light receiving element 12, it would have a noticeable effect upon the measurement result, whereas such effect of light having a brightness below the predetermined value would be negligible. Since portion 23d is inclined by angle θ, if the spacing from the axial center plane of the lenses 11a, 12a to the central portion 23b of filter member 23 is *X*, the distance between that plane and the right-hand end of filter member 23 is *X* + α as shown in Fig. 3.

Since the spot area 23e is inclined by bending the filter member 23 as explained above, light reflected in this area 23a of the inner surface of filter member 23 is directed toward the right-hand side (downward in the drawing) such that it does not pass through light receiving lens 12a. Accordingly, such light does not reach light receiving element 12, causing no error in the measurement result.

Fig. 4 shows a third embodiment which differs from the second embodiment only by use of a filter member 33 instead of filter member 23. Only filter member 33 is shown in Fig. 4. Like filter member 23 of the second embodiment filter member 33 has a left-hand portion 33c, a central portion 33b and a right-hand portion 33d. Portion 33c corresponds to and is arranged in the same way as portion 23c of filter member 23. Portion 33d is inclined at an angle θ in a similar way as portion 23d of filter member 23. In its central portion 33b filter member 33 of this embodiment is once bent towards the distance measuring device 1 by such a distance that the left- and right-hand ends of the filter member are substantially in the same plane perpendicular to the light projecting axis, despite the fact that portion 33d is inclined. Therefore, also in this embodiment a spot area 33e corresponding to the spot area 23e of the second embodiment is inclined with the same result as that explained for the second embodiment.

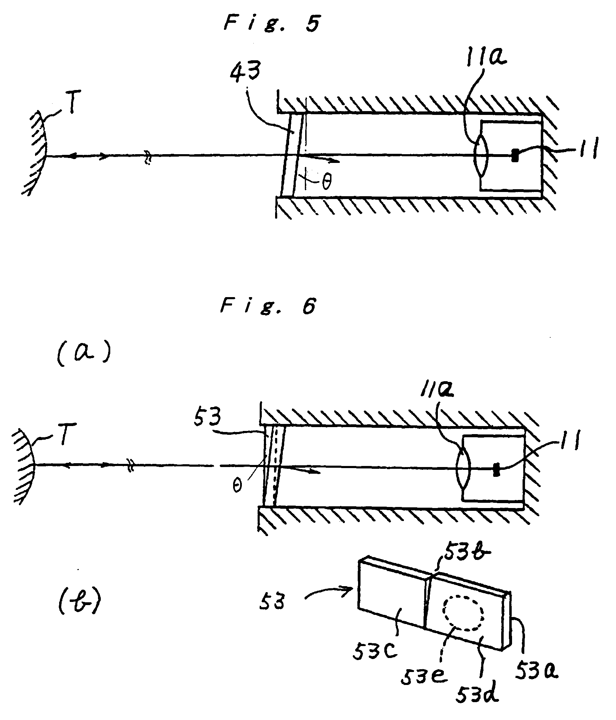

Fig. 5 shows a vertical cross-sectional view of a fourth embodiment. In this embodiment, a filter member 43 is inclined vertically by an angle θ with respect to a plane perpendicular to the light projecting axis and in a direction such that its upper portion is nearer to the distance measuring device 1 than the lower portion. It is to be noted that that filter member 43 could as well be inclined in the opposite direction, i.e., such that its lower portion is nearer to the distance measuring device 1 than the upper portion.

Fig. 6 shows a fifth embodiment. Fig. 6(a) shows a vertical cross-sectional view of the fifth embodiment. In this embodiment, a filter member 53, as shown in the perspective view in Fig. 6(b), has a boundary central portion 53b, a left-hand portion 53c opposite to the light receiving lens (not shown) and a right-hand portion 53d opposite to light projecting lens 11a. Portion 53d is perpendicular to the light projecting axis without inclination. Portion 53d including the spot area 53e is inclined vertically by an angle θ similar to filter member 43 in Fig. 5. Like in the case of Fig. 5, the upper part of portion 53d may be inclined either towards or away from the distance measuring device 1.

In both filter members 43, 53 of the fourth and fifth embodiments, respectively, the spot area is inclined so that light reflected (or scattered) at the inner surface of the filter member is turned either downward or upward so that it cannot impinge on the light receiving element of the distance measuring device 1. Thus, an error in the measurement result is prevented in the same way as in the preceding embodiments.

Incidentally, in Fig. 3 and Fig. 6, although a sharp bend is illustrated at the central portion, it is preferred that the bend be achieved by a moderately curved surface. Furthermore, while reference has been made hereinabove to horizontal and vertical directions, it will be appreciated by those skilled in the art that in the preceding description "horizontal" and "vertical" may be exchanged for each other and may even be replaced by an arbitrary pair of two orthogonal axes, depending on the mounting posture of the object sensing apparatus.

The main effects of the present invention can be summarized as follows:
Since a filter member is provided in front of a distance measuring device with a predetermined spacing in between, it is possible to place the entire range within which there is a possibility that an object to be sensed approaches within the distance measurable range of the distance measuring device without excluding distances near to the object sensing apparatus. This prevents failures such as failing to sense an approaching object.
Since the filter member is provided at an angle of inclination, the components of the light projected from the light projecting means which are reflected or scattered by the inner surface of the filter member, can be directed in a direction different from a direction toward the light receiving means. There is less possibility that light other than the light reflected by an object to be sensed is received by the light receiving means, thereby enabling accurate distance measurement and improving accuracy in distance measurement.
While the whole filter element may be inclined it is also possible to have only a portion of the filter member inclined, namely a portion which includes a spot area with a predetermined brightness or higher. Assuming the light emitting element and the light receiving element are arranged side by side along a horizontal axis the angle of inclination θ may be with respect to a horizontal axis (left-right direction) or a vertical axis (up-down direction). It is therefore possible to select the inclination state optimal for each apparatus, offering design freedom for the apparatus structure.
Further, when the filter member is provided within and in the vicinity of the boundary of the distance measurable range of the distance measuring device, it is possible to reduce the spacing between the distance measuring device and the filter member to a required minimum, making it possible to structure the apparatus small.

## Claims

1. An object sensing apparatus, comprising:
a distance measuring device (1) having light projecting means (11, 11a) for projecting a measurement light beam toward an object (*T*), and light receiving means (12, 12a) for receiving a reflected light beam reflected by said object, and
a filter member (3; 23; 33; 43; 53) provided in front of said distance measuring device (1) with a predetermined spacing in between,
**characterized in that** at least a portion (3d; 23d; 33d; 53d) of said filter member is provided at an angle of inclination (θ) such that components of the measurement light beam reflected or scattered by an inner surface of said filter member are given a direction different from a direction toward said light receiving means.

2. The apparatus according to claim 1, wherein a portion (23d; 33d; 53d) of said filter member (23; 33; 53) is inclined at said angle of inclination (θ) with respect to a plane perpendicular to a light projecting axis of said light projecting means (11, 11a), said portion including a spot area (23e; 33e; 53e) within which the brightness of said measurement light beam equals or exceeds a predetermined value.

3. The apparatus according to claim 1 or 2, wherein said light projecting means (11, 11a) and said light receiving means (12, 12a) are juxtaposed in a left-right direction on the same plane, and said filter member (3) or said portion (23d; 33d) of it is inclined in said left-right direction with respect to a plane perpendicular to a light projecting axis of said light projecting means such that it is nearer to said light receiving means than to said light projecting means.

4. The apparatus according to claim 1 or 2, wherein said light projecting means (11, 11a) and said light receiving means (12, 12a) are juxtaposed in a left-right direction on the same plane, and said filter member (43) or said portion (53d) of it is inclined in an up-down direction with respect to a plane perpendicular to a light projecting axis of said light projecting means.

5. The apparatus according to any one of claims 1 to 4, wherein said filter member is provided within a distance measurable range (Z) of said distance measuring device (1) and in the vicinity of a boundary thereof.
